# EUROPEAN PATENT SPECIFICATION

(11) **EP 1 500 569 B1**
(45) Date of publication and mention of the grant of the patent: **26.04.2006**
(21) Application number: 04020472.9
(22) Date of filing: 28.07.2000
(51) Int. Cl.: B62B 7/08

(54) **Foldable Stroller**
Klappbarer Kinderwagen
Voiture d'enfant pliable

(30) Priority: 08.05.2000 US 567096; 03.07.2000 EP 00114237
(43) Date of publication of application: 26.01.2005
(62) Divisional of application: 00116122.3
(73) Proprietor: GRACO CHILDREN'S PRODUCTS INC., Exton, PA 19341 (US)
(72) Inventor: Pacella, Jonathan M., New Holland PA 17557 (US); Kakuda, Baku, Reading PA 19607 (US); Pike, Robert T., Reading, PA 19606 (US); Hartenstine, Curtis M., Birdsboro PA 19508 (US)
(74) Representative: Molnia, David

(56) References cited:
- WO-A-00/06437
- DE-A- 19 833 857
- US-A- 5 938 229

## Description

### BACKGROUND

Foldable strollers, such as disclosed in U.S. Patent Nos. 5,511,441 issued to Arai; 5,181,735 issued to Onishi; and 4,953,887 issued to Takahashi, *et al.,* and co-pending U.S. Patent Application SN. 09/172,534, have an articulated stroller frame that allows the stroller to fold from its extended (use) configuration to its collapsed (stow) configuration. These strollers include soft goods made of fabric, such as a seat, back support, canopy, storage basket, etc., covering parts of the stroller frame. The back support can be movably configured between a sitting position and a recumbent or lying position. These strollers also have left- and right-side locking devices, between the respective left- and right-side push arms of the handle bar frame and the left- and right-side rear legs, to maintain the stroller in the operating configuration.

US-A-5,938,229 discloses a foldable stroller according to the preamble of claim 1.

In such strollers, and other foldable strollers, the canopy frame or bow is typically attached to the push arms or the locking devices. Consequently, the position of the canopy frame, relative to the push arms, remains fixed at all times, between its open position and its closed position. When the stroller is folded, the canopy frame is at its closed position. But since the canopy frame position is fixed relative to the push arms, if a relatively large canopy is used, the canopy frame can protrude beyond the extent of the handle bar. Particularly since a larger canopy is desirable to protect infants from exposure to sunlight, the stroller can become bulky. Accordingly, there is a need for a stroller that can be made more compact, particularly with the use of a larger canopy.

Moreover, strollers typically have left and right side locking devices to maintain the frame in the use configuration. The operator needs to use both hands to unlock the two locking devices. Using two hands can be cumbersome and inconvenient, particularly when only one hand is free. In this respect, U.S. Patent No. 6,068,284 assigned to the present applicant provides a remotely located one-hand-fold (OHF) actuator. The OHF actuator is conveniently located at the center of the handle bar, which makes it convenient and simple to simultaneously unlock its pair of locking devices using one hand. The OHF actuator has a member rotatably mounted to the handle bar. The movable member carries a rotation-to-linear motion transfer coupling, which comprises two pairs of opposing helical grooves engageable with a pair of pins movably mounted to the handle bar. These pins are wired to the locking devices using a pair of cables. The opposing helical grooves guide and move the pins toward each other to simultaneously pull the cables and release both locking devices upon rotating the movable member. A lock, which is associated with the movable member, prevents the moving member from releasing the locking devices until it is manipulated to unlock.

The lock comprises a collar fixedly mounted to the handle bar, adjacent the left side of the movable member for right hand operation, and a latch slidably mounted on the left side of the movable member. A socket formed in the collar receives a portion of the latch to prevent the movable member from rotating. To fold the stroller, the operator slides the latch away from the collar and rotates the movable member and the latch with a single hand, simultaneously unlocking both locking devices.

The OHF actuator described in the '284 patent provides the convenience and simplicity. Nonetheless, the operator may find it desirable to independently control the two locking devices remotely, while maintaining the one-hand-fold operating feature, to provide additional protection from unintentional stroller folding.

Further, it is desirable for the stroller to have ergonomically correct handle bar, which typically is the cross bar member extending across the push arms, for comfort and control. For added comfort to the caretaker, the handle bar angle can be adjusted relative to the push arms, as disclosed, for example in U.S. Patent Nos. 5,184,835 issued to Huang and 5,556,805 issued to Wang. Including this type of an adjustable handle bar, however, makes it more difficult to provide a remote hinge-lock actuator on the handle bar, which typically needs a Bowden cable or similar arrangements to allow for the handle bar to rotate without actuating the locking devices. In this respect, U.S. Patent No. 5,775,718 discloses a simple, cable operated remote hinge-lock actuator positioned adjacent to the handle bar. It would be desirable to incorporate a simple cable-operated remote hinge-lock actuator into the existing structure. Moreover, it would be desirable to independently control the two locking devices remotely, while maintaining the one-hand-fold operating feature, to provide additional protection from unintentional stroller folding.

Moreover, it would be desirable for the stroller to carry an infant carrier. While many different configurations for that purpose have been contemplated, there still remains a need for a stroller that is configured to secure an infant carrier in two or more reclined or tilted positions.

The present invention addresses these needs.

### SUMMARY

The present invention is drawn to a foldable stroller as defined in claim 1. Further embodiments are defined in the dependent claims.

### BRIEF DESCRIPTION OF THE DRAWINGS

These and other features, aspects, and advantages of the present invention will become more apparent from the following description, appended claims, and accompanying exemplary embodiments shown in the drawings, which are briefly described below.
Fig. 1 is a perspective view of a foldable stroller according to one embodiment of the present invention in its operating position, with the soft goods removed to reveal a stroller frame.
Fig. 1A is a perspective view a foldable stroller of Fig. 1 with the soft goods in place.
Fig. 2 is a side view of the foldable stroller of Fig. 1.
Fig. 3 is a side view of the foldable stroller of Fig. 1 in the folded position.
Fig. 4 is a detailed bottom perspective view of a parent tray and a remote one-hand-fold (OHF) actuator.
Fig. 5 is a side view of the foldable stroller of Fig. 1, with an infant carrier mounted thereto and positioned at an infant upright position.
Fig. 6 is a side view of the foldable stroller of Fig. 1, with the infant carrier mounted thereto and positioned at an infant reclined position.
Fig. 7 illustrates another embodiment of the OHF actuator shown at its neutral (un-actuated) position.
Fig. 8 illustrates the OHF actuator of Fig. 7 at a first partially actuated position (right side locking device unlocked).
Fig. 8A illustrates the OHF actuator of Fig. 7 at a second partially actuated position (left side locking device unlocked).
Fig. 9 illustrates the OHF actuator of Fig. 7 at a full actuated position (both the left and right locking devices unlocked).
Fig. 10 illustrates an exploded view of the OHF actuator of Fig. 7.
Fig. 11 schematically illustrates a perspective view of a different stroller incorporating another embodiment of the OHF actuator.
Fig. 12 illustrates a detailed perspective view of the OHF actuator of Fig. 11, shown at its neutral (un-actuated) position.
Fig. 13 illustrates the OHF actuator of Fig. 12 at a first partially actuated position (right side locking device unlocked).
Fig. 14 illustrates the OHF actuator of Fig. 12 at a second partially actuated position (left side locking device unlocked).
Fig. 15 illustrates the OHF actuator of Fig. 12 at a full actuated position (both the left and right locking devices unlocked).
Fig. 16 illustrates an exploded view of the OHF actuator of Fig. 12.
Fig. 17 schematically illustrates the inner side view of the OHF actuator of Fig. 12.
Fig. 18 schematically illustrates the cross-sectional view of the OHF actuator of Fig. 12, illustrating how the pins engage its left and right movable members.

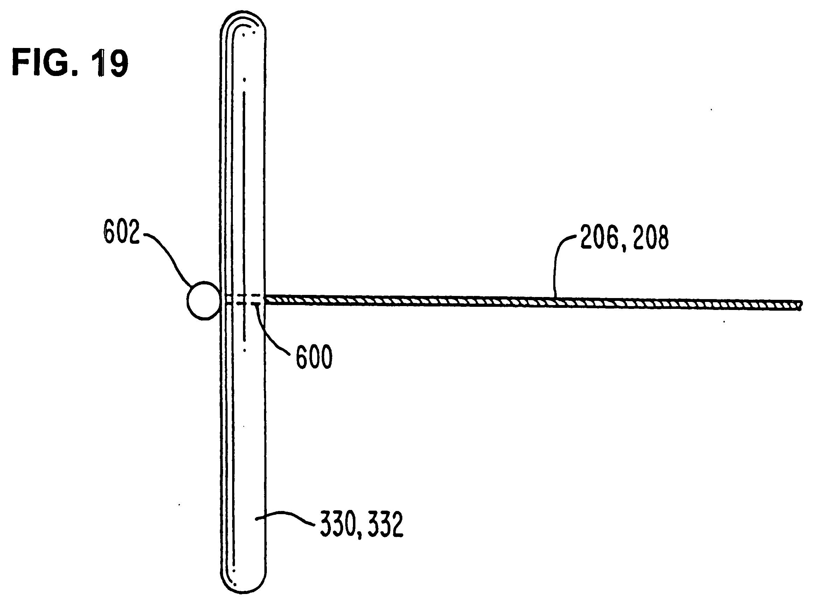

Fig. 19 illustrates an enlarged view of the pin connected to a control cable.
Fig. 20 illustrates an exemplary exploded cut-away view of the locking device of the stroller of Fig. 11.
Fig. 21 illustrates a cross-sectional view of the locking device of Fig. 20.
Fig. 22 illustrates a top view of a control plate for actuating the locking device of Fig. 20.
Fig. 23 illustrates a cross-sectional side view of the control plate taken along line 23-23 of Fig. 22.
Fig. 24 is an end view of the control plate of Fig. 22.

### DETAILED DESCRIPTION

Although references are made here to directions in describing the stroller and its components, they are made relative to the drawings (as normally viewed) for convenience. The directions, such as left, right, upper, lower, inward, outward, etc., are not intended to be taken literally or limit the present invention in any form. Moreover, the numerical nomenclatures, first, second, third, fourth, etc., are used solely for purposes of tracking the elements or features. These numerical nomenclatures are not intended to be taken literally or to limit their associated elements.

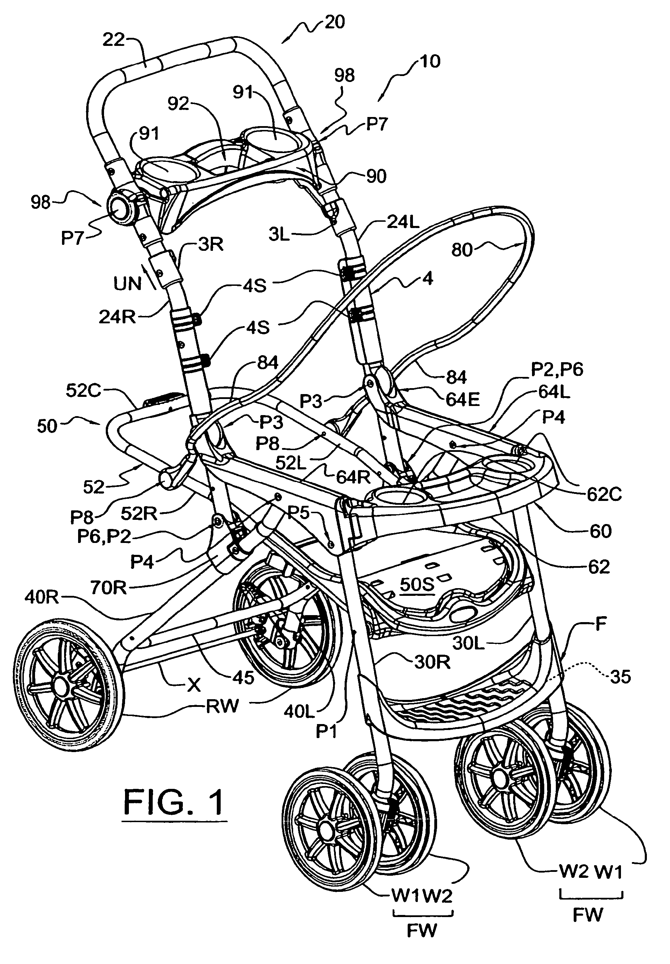

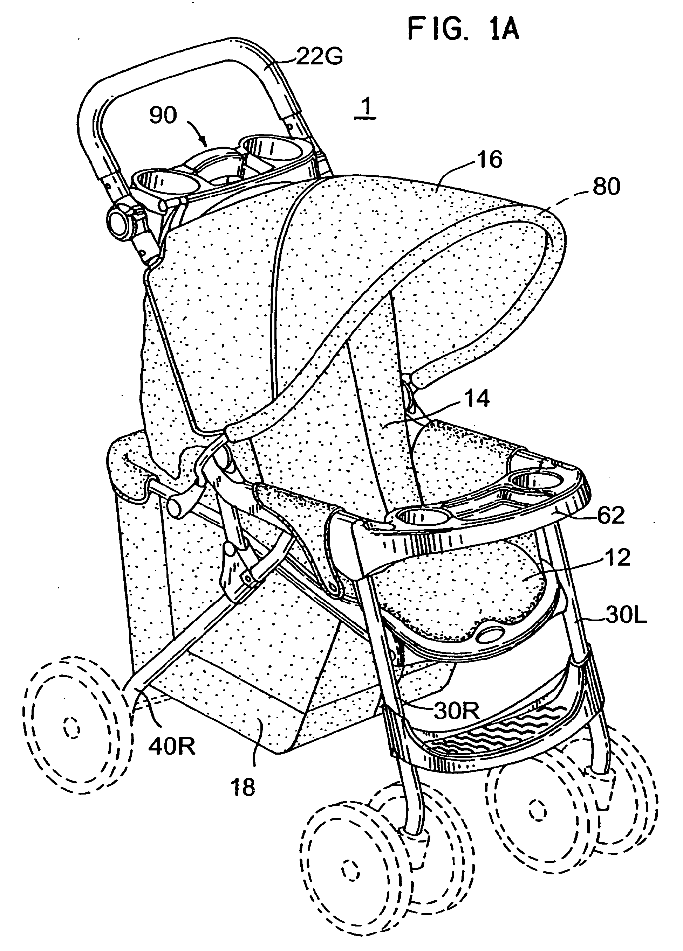

Fig. 1A shows the perspective view of the foldable stroller 1 according to one embodiment of the present invention. To more clearly reveal the stroller frame 10, the stroller 1 (in Figs. 1 and 2-6) is shown without the associated "soft goods," such a seat cushion 12, seat back support 14, canopy 16, basket 19, hand grip 22G, etc., which are typically made of cloth or plastic or both, or a flexible material. The stroller 1 with the soft goods in place is shown in Fig. I A. The stroller 1 is generally intended for transporting children, but the inventive principles can be applied to all types of wheeled transports, including carts or carriages having a foldable frame.

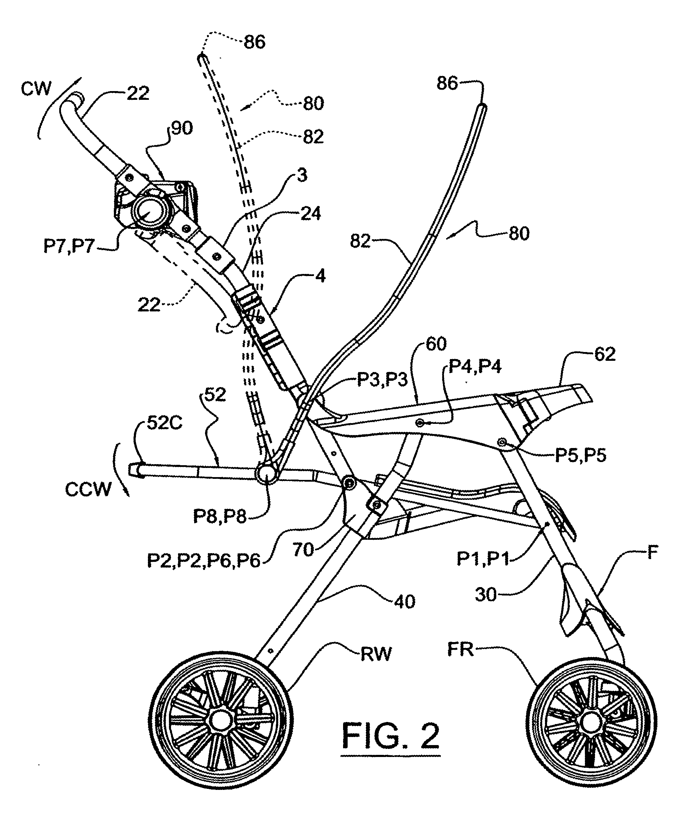

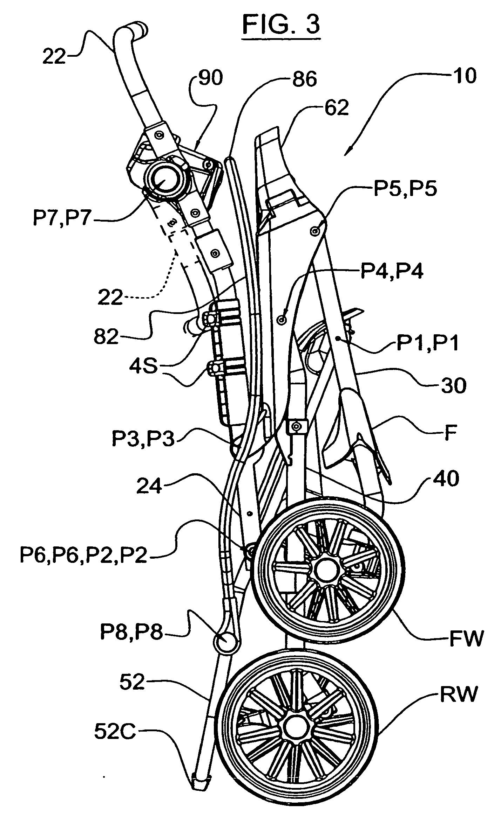

The stroller 1 includes a stroller frame 10 that is convertible between an operating or use position (shown in Figs. 1, 1A, and 2), and a folded or stowed position (shown in Fig. 3). In the folded position, the stroller 1 is folded to a generally flattened configuration for storage. In the operating position, the stroller 1 is configured to receive and transport a passenger in a manner well understood by those skilled in the art.

Referring to Figs. 1 and 2, the stroller frame 10 can have a basic frame configuration, similar to the ones identified previously in co-pending U.S. application SN. 09/172,534 and U.S. Patent Nos. 5,511,441; 5,181,735; and 4,953,887. The stroller frame 10 according the present invention includes a handle bar frame 20, legs 30R, 30L, 40R, 40L, a passenger support or frame 50, a tray assembly 60, and a pair of hinge locks or locking devices 70. In the drawings, a letter "P" or "Px" (where x represents a number) designates a pivotal connection, a pivot, or pivotal mount, or any conventional pivoting configuration, which can include pins, shaft, bolt, rivet, bearings, etc.

The handle bar frame 20 comprises a handle bar 22 and right and left push arms 24R, 24L (collectively 24) extending from the handle bar 22. The handle bar 22 and the push arms 24 form a generally U-shaped frame. The handle bar 22 can be ergonomically configured for comfort, such as described in U.S. Patent Nos. 5,454,584 and 5,605,409 issued to Haut, *et al.* The handle bar frame 20 can include an angle adjuster 98 for pivotally positioning the handle bar 22 relative to the push arms 24. The inner operative workings of the angle adjuster is omitted for brevity, particularly since any known angle adjuster can be used, such as the ones disclosed in aforementioned U.S. Patent Nos. 5,184,835 issued to Huang and 5,556,805 issued to Wang . In the present embodiment, the angle adjuster 98 is adapted to provide a greater rotation capability so that the handle bar can be flipped over close to the push arms 24, as shown in phantom in Figs. 2-3.

The legs 30R, 30L, 40R, 40L can be described in terms of front legs 30, which include a front right (FR) leg 30R and a front left (FL) leg 30L, and rear legs 40, which include a rear right (RR) leg 40R and a rear left (RL) leg 40L. Each leg 30R, 30L, 40R, 40L has a lower end to which at least one rotatable wheel W is mountable. As shown, the front legs 30 each can have a pair of front wheels W1, W2 (collectively FW). The rear legs 40 can be reinforced with a cross brace 45, which extends between the rear wheels RW, above the rear wheel axle X. Similarly, the front legs 30 can be reinforced with a cross brace 35 (hidden inside the foot rest F) extending between the front wheels W.

The passenger support 50 includes a substantially U-shaped seat support frame 52. A back support 14 (Fig. 1A), which can comprise a soft good (fabric) or frame type with a reclining latch (not shown), can be connected to the seat support frame 52. The seat support frame 52 has a cross arm 52C joined to left and right arms 52L, 52R. The seat support frame arms 52L, 52R are pivotally mounted to the respective front legs 30L, 30R at pivots P1, and are pivotally mounted to the locking devices 70 at pivots P2, as better illustrated in Fig. 2. The locking devices 70 are fixedly mounted to the rear legs 40. Accordingly, the seat support frame arms 52L, 52R are operatively connected pivotally to the rear legs 40. The support 50 can further include a seat 50S secured to the seat support frame arms 52L, 52R.

A portion of the seat support frame 52 protrudes beyond the pivoting connection P2 of the rear legs 40 (or the locking devices) to the support frame arms 52L, 52R, as shown in Fig. 2. A storage basket or the like 18 (Fig. 1A) can hang from the seat support frame 52, and hence is sometimes referred to as a basket frame, for storing various sundry items, including diapers, bottles, blankets, bibs, and other items.

The tray assembly 60, which can have a U-shaped configuration as shown in Fig. 1, comprises a front tray 62 and left and right side arms 64L, 64R (collectively 64) pivotally connected respectively to the left and right push arms 24L, 24R at pivots P3. The distal (rear) end of each of the side arms 64 can have a pair of spaced ears 64E or the like that are spaced apart to receive the respective push arm 24L, 24R, and are held pivotally together with pivots P3. The front tray 62, which can have one or more cup or container holding compartments 62C, can be either fixedly formed with the side arms 64, detachably mounted to the side arms 64, such as disclosed in U.S. Patent No. 4,856,809 Alternatively, the front tray 62 can be pivotally connected or hinged to one side of the side arms 64L, 64R, while the opposite side can be latched to the other of the side arms 64L, 64R. Also, the front tray 62 can also be rotatably mounted to the one side arms 64L, 64R, thus creating two axes of rotation. In that instance, the tray 62 can be opened by pivoting the front tray along a first axis (extending substantially parallel to one of the front legs 30R, 30L and rotated about a second axis to tuck the tray 62 alongside the one front leg (30R, 30L). Moreover, any conventional attaching means can be contemplated for detachably or movably attaching the tray 62 to the side arms 64.

The front and rear legs 30, 40 are pivotally mounted to the tray assembly 60. Specifically, the upper end of the front and rear legs 30, 40 are pivotally mounted to the respective side arms 64 with pivots P4, P5, respectively.

The locking devices 70 (left 70L, right 70R) pivotally mount the handle bar frame 20 to the rear legs 40 at pivots P6. The locking devices 70 can be any conventional locking device for maintaining a fixed position between the rear legs 40 and the handle bar frame 20 when locked, and for allowing pivotal motion therebetween when unlocked. For instance, the left and right locking devices 70L, 70R each can be fixedly attached to and positioned between the ends of the respective rear leg 40L, 40R. The ends of the respective left- and right-side push arms 24 can be pivotally mounted to the respective locking devices 70 at pivots P6 (which can share common pivots with pivots P2). To lock the handle bar frame 20 to the rear legs 40, each locking device 70 can include, for instance, a plunger or the like (not shown) that is movably mounted inside the handle bar frame 20, or a latch (not shown) that is pivotally mounted to the handle bar frame 20. The plunger can be biased inwardly into the respective locking device 70L, 70R or the latch can be biased to hook onto a fixed portion of the respective locking device 70L, 70R to lock the handle bar frame 20 to the rear legs 40. Alternatively, the locking device 70 can be configured as disclosed in the previously mentioned co-pending U.S. Patent Application SN. 09/172,534, or U.S. Patent No. 5,110,150 issued to Chen

A pair of remote actuating members 3L, 3R (collectively 3) or the like can be operatively connected to the locking devices 70, such as with a cable or rod (not shown). Each of the left and right actuating members 3L, 3R are slidably mounted to the respective left and right push arms 24L, 24R. Pulling each of the remote actuating members 3L, 3R upwardly along the respective left and right push arms 24L, 24R actuates the respective locking device 70L, 70R, e.g., moves the latching plungers upwardly into the push arms 24 to disengage the respective latch.

To unlock the stroller frame 10 from the operating position to the folded position, the operator can slide both remote actuating members 3 along the push arms 24 in the direction of arrow UN (Fig. 1), which unlocks the locking devices 70. Once the locking devices 70 are unlocked, the stroller can be folded, for example, by pivoting the tray assembly 60 and the handle bar frame 20 toward each other, i.e., moving the front tray counterclockwise CCW (Fig. 2) while moving the handle bar frame 20 clockwise CW. This raises the front tray 62 upwardly to the folded position, while lowering the cross arm (distal end portion) 52C of the seat support frame 52, as seen in Fig. 3.

### Upper Tray/OHF Actuator

Referring to Figs. 1, 4, and 10, the stroller also can include a remote one-hand-fold (OHF) actuator 93. The OHF actuator 93 can be connected to the remote actuators or actuating members 3L, 3R (collectively 3). According to one aspect of the present invention, the OHF actuator 93 can be formed with an upper tray 90, which is connected to the handle bar frame 20. The upper tray 90 comprises at least one recessed compartment 91, such as a cup or container holding recess. The illustrated embodiments show two cup or container holding compartments 91 and a through-hole 92, which permits the operator's hand or fingers to be inserted therethrough.

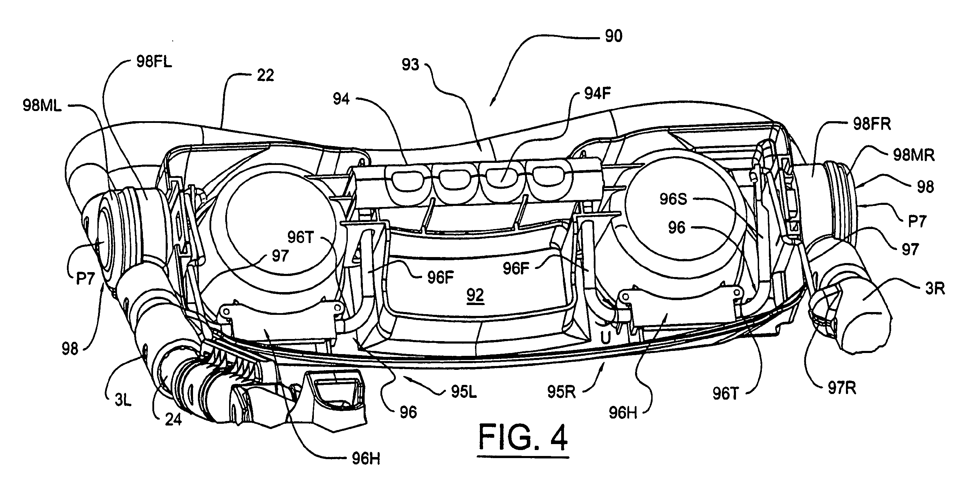

The tray 90 can be mounted to the push arms 24 or to the angle adjuster 98 (Figs. 1 and 4) about pivots P7. Specifically, the angle adjuster 98 can have a fixed pivot member 98FL, 98FR (collectively 98F) extending from each upper end of the left and right push arms 24L, 24R and a movable pivot member 98ML, 98MR (collectively 98M) extending from each lower end of the handle bar 22. The fixed pivot members 98F are positioned facing each other, i.e., positioned inwardly of the respective movable pivot members 98M. The fixed pivot members 98F can have tracks, sockets, or any mechanical connectors that can receive complementary mating parts formed on the left and right sides 90L, 90R of the tray 90.

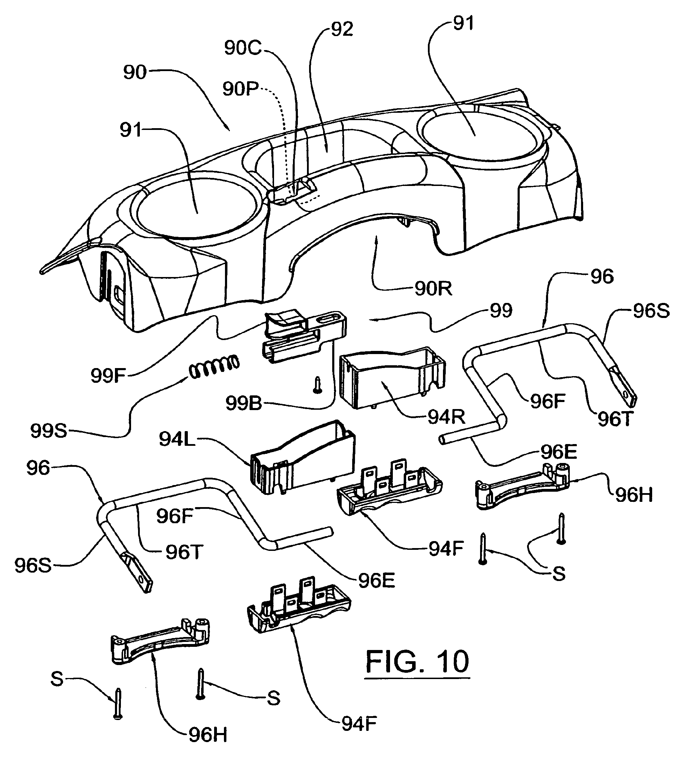

Referring to Fig. 4, the OHF actuator 93 comprises a movable member 94, such as a handle or lever that can be grasped, pulled, pushed, or squeezed to actuate, and left and right linkage assemblies 95L, 95R (collectively 95). The movable member 94 can be mounted anywhere convenient on the upper tray 90, such as on an underside thereof, as illustrated in Fig. 4, for movement between an actuated or unlocked (e.g., pushed or squeezed) position, which pulls up both remote actuators 3 to release both locking devices 70, and an un-actuated or locked position, where the remote actuators 3 are at their normal, down position (locking devices 70 remain locked). The movable member 94 can be biased toward the un-actuated (locked) position, and can include finger contours 94F. Either hand of the operator can be inserted into the through-hole 92 so that the fingers loop around the finger contours 94F. To actuate or release the locking devices 70, the operator presses or squeezes the movable member 94 with his or her fingers. In this respect, the upper tray can have a recess 90R to accommodate the hand operation. See Fig. 10.

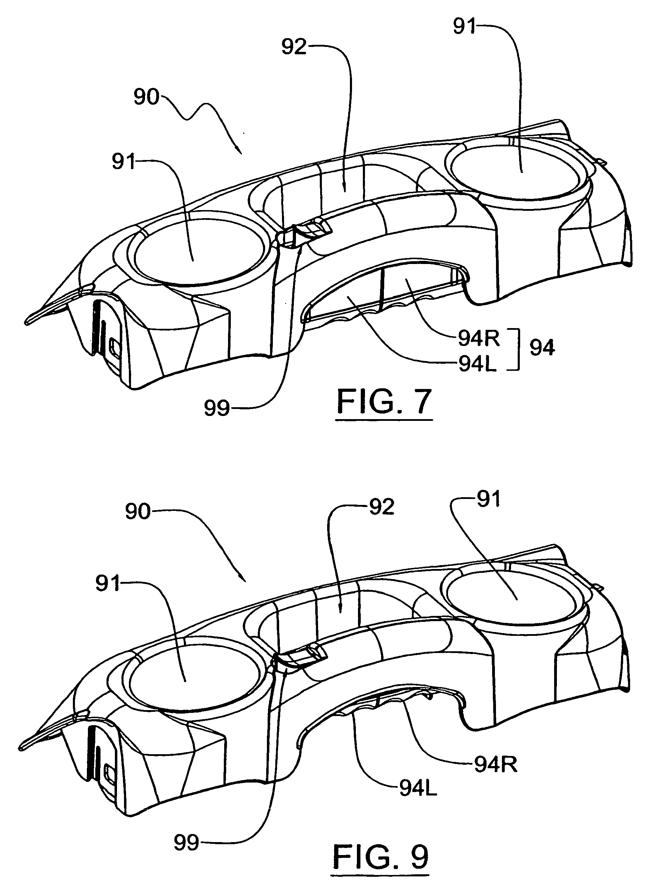

Alternatively, referring to Figs. 7-10, this OHF actuator 93 can include a pair of side-by-side movable members 94R, 94L (collectively 94) that are independently movable. The first (right) movable member 94R can be mounted to the underside of the front tray 90 for movement between an actuated or unlocked (e.g., pushed or squeezed) position, which pulls up the right remote actuator 3R to release the right locking device 70R, and an un-actuated or locked position, where the right remote actuator 3R is at its normal, down position (right locking device 70R remains locked). The second (right) movable member 94L can be mounted to the underside of the upper tray 90 adjacent to the first movable member 94R for movement between an actuated or unlocked (e.g., pushed or squeezed) position, which pulls up the left remote actuator 3L to release the left locking device 70L, and an un-actuated or locked position, where the left remote actuator 3R is at its normal, down position (left locking device 70L remains locked). Each of the movable members 94R, 94L can be biased toward the un-actuated (locked) position, and can include finger contours 94F. Either hand of the operator can be inserted into the through-hole 92 so that the fingers loop around the finger contours 94F. To actuate or release the locking devices 70, the operator presses or squeezes both of the movable members 94R, 94L with his or her fingers.

Referring to Fig. 10, the OHF actuator 93 also can include an optional lock 99 for locking at least one of the movable members 94R, 94L. The optional lock 99 can be adapted for either left hand or right hand operation. For right hand operation, the lock 99 can be placed on the left side of the through-hole 92, as shown in Figs. 7-9, so that it can be operated with a right thumb. For left hand operation, the lock 99 can be placed on the right side of the through-hole 92 so that it can be operated with a left thumb (mirror image of the configuration for the right hand configuration).

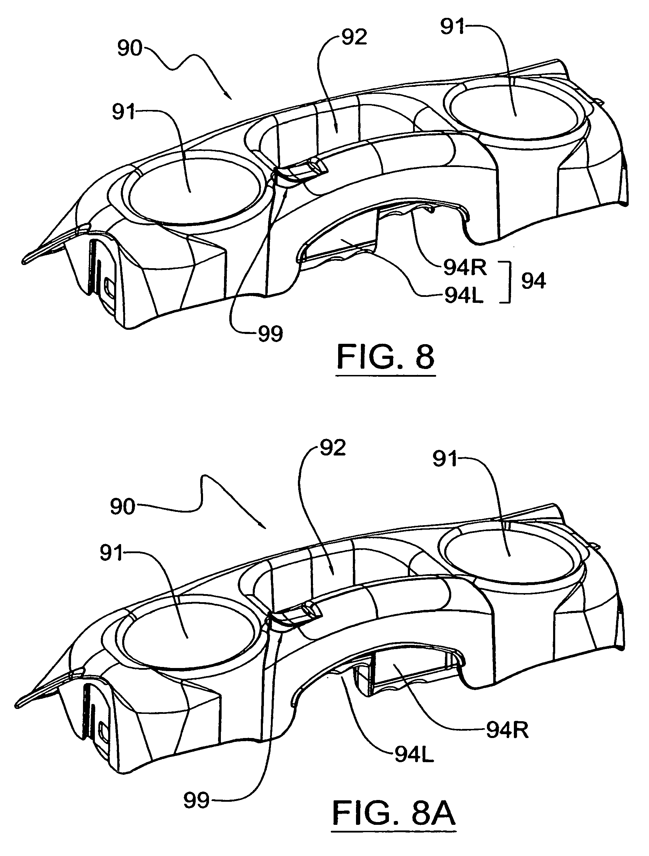

The lock 99 comprises an elongated body 99B slidably mounted in a recess or pocket 90P formed in the upper tray 90 to block or prevent one or both movable members 94R, 94L from moving to the actuated position. The elongated body 99B can have a raised finger land 99F, which can have grooves, bumps, contours or any other irregularity to improve gripping. To accommodate the finger land 99F, the upper tray 90 can have a cutout 90C to allow the lock 99 to slide between a locked position (Fig. 7) and an unlocked position (Figs. 8-9). The elongated body 99B can have a bed or recess 99R for seating or receiving a spring 99S, such as a compression spring. The spring 99S abuts against the end of the pocket 90P so that it biases the elongated body 99B toward the right, as illustrated in Fig. 7 (or left for left hand configuration). At its neutral position (Fig. 7), the elongated body can be configured to block one or both movable members 94R, 94L to prevent one or both movable members 94 from moving to the actuated position.

Referring to Figs. 4 and 10, the right and left linkage assemblies 95L, 95R are substantially identical, mirror images of each other. Each of the right and left linkage assemblies 95L, 95R comprises a cross linkage 96 connected to a push rod 97. The cross linkage 96 is substantially U-shaped, having a first arm 96F and a second arm 96S spaced from the first arm 96F and joined by a third arm 96T. The cross linkage 96 can further include an extension arm 96E extending from the first 96F arm substantially parallel with the third arm 96T. The first arm 96F and the extension 96E are connected to one side of the movable member 94 or one of the movable members 94R, 94L. Each movable member 94 can be formed as a single piece or multiple pieces, two pieces being illustrated. In the illustrated embodiment, the cross linkage 96 can be positioned between the two pieces, which can have complementary fittings, such as snap connectors or any other conventional mechanical retaining or fixing means. The second arm 96S is pivotally connected to the push rod 97. The third arm 96T is pivotally journaled to the underside of the tray 90 using a holder 96H connected to the underside of the upper tray 90.

For the embodiment that uses a single movable member 94, actuating the movable member 94 simultaneously rotates the left and right cross linkages 96 in the direction of arrow U (pivots toward the upper side of the tray 90). For the embodiment that uses a pair of movable members 94R, 94L, actuating the first movable member 94R rotates the right cross linkage and actuating the second movable member 94L rotates the left cross linkage. The operation of the first and second movable members is thus independent.

One end of the push rod 97 is pivotally connected to the free end of the second arm 96S, and the other end is pivotally secured to the respective actuating member 3L, 3R. In this respect, each of the actuating members 3L, 3R has a push rod receptacle 97R configured to receive and hook (or latch) onto the respective push rod 97. As the operator squeezes the movable member 94, depending on its configuration and whether both or one is squeezed, one or both the left and right cross linkages 96 rotate, which pulls up the respective left and right push rods 97, and thus the actuating members 3L, 3R.

Figs. 7-10 illustrate the OHF actuator 93 with two movable members 94R, 94L at various positions, between the neutral (locked) position (Fig. 7) to fully actuated (unlocked) position (Fig. 9). Figs. 8 and 8A illustrate the OHF actuator 93 in the partially actuated positions, where only one of the two movable members 94 is unlocked in each instance. The OHF actuator 93 can have two independently operable members 94R, 94L, each associated with one of the two locking devices 70R, 70L. In the positions shown in Figs. 8 and 8A, since only one of the two locking devices 70R, 70L is unlocked, the stroller 1 still cannot be folded.

Referring to Figs. 7 and 9 (for right hand operation), to fold the stroller 1, the operator places the right hand on the OHF actuator 93. With the right thumb, the operator can engage the raised finger land 99F and slide the elongated body 99B away from the movable members 94R, 94L to unblock them. In the illustrated embodiment, the elongated body 99B is slid to the left to the position shown in Figs. 8-9, which unblocks both movable members 94. Both movable members 94R, 94L are free to move at this point when squeezed. The same hand operating the lock 99 can grip both movable members 94R, 94L and move them to the unlock positions (Fig. 9). This pulls up both remote actuators 3, which in turn releases the right and left locking devices 70R, 70L to allow the stroller 1 to fold.

In the embodiment where the lock 99 only blocks one of the two movable members 94, if the user unintentionally moves the unblocked movable member (94R or 94L), since the other movable member (94L or 94R) remains locked, the present OHF actuator 93 will prevent unintentional folding of the stroller 1. Moreover, since the first and second movable members 94R, 94L are independently operable, requiring deliberate and conscientious effort to squeeze both movable members with one hand, while the lock 99 is in the unlock position, unintentional folding of the stroller can be prevented.

The lock 99 is preferred, but it is not required since the present OHF actuator 93 requires independent actuation of both of its first and second movable members. The lock 99 thus operates as a secondary lock when it is incorporated. But, by providing two independently operable members plus the lock 99, the operator has to conscientiously and deliberately operate both movable members 94R, 94L and the secondary lock 99 to fold the stroller, which prevents unintentional folding.

### Canopy Frame

According to another aspect of the present invention, the stroller includes a canopy support rod or frame 80 attached to the seat support frame or basket frame 52 at pivots P8. The frame 80 comprises one or more canopy bows 82 (only one shown that supports a canopy) and pivotally or movably attached to the seat support frame 52. In this respect, any conventional bow mounting system can be used. The canopy frame 80 can be moved between a use position (solid in Fig. 2) for shading a passenger and a stow position (phantom in Fig. 2) where it is pulled close to the handle bar frame, away from the passenger. The canopy bow(s) 82 is pivotally attached at the pivots P8, which are located on the portion of the seat support frame 52 extending beyond the pivots P2, P6. In this respect, the canopy bow 82 can have an outwardly extending bulge 84 to provide clearance for the push arms 24.

When the stroller is being folded from the operating position shown in Fig. 2 to the folded position shown in Fig. 3, the distal end (cross arm 52C) of the seat support frame 52 rotates counterclockwise CCW, toward the rear wheels RW, while the handle bar frame 20 rotates clockwise CW. This lowering action of the support frame 52 retracts the bow 82 downwardly and automatically positions the bow 82 close to the handle bar frame 20. It should be noted that the canopy (cloth part) 16 can be mounted around the handle bar frame 20. Moving the handle bar frame 20 pivots the canopy frame 80 to the relative position shown in phantom when the stroller 1 is folded. But because the canopy frame 80 is retracted when the stroller is fully folded (Fig. 3), the bow 82 is tucked between the handle bar frame 20 and the tray assembly 60.

The area (crest) 86 of the bow furthest from the pivots P8 can be located higher than the handle bar 22, as shown in Fig. 2 when the stroller is in the operating position. Nonetheless, because of the present unique mounting configuration of the canopy frame 80, the crest 86 of the bow can extend well below the handle bar 22, as shown in Fig. 3. In this respect, it is preferable for the crest 86 to be positioned inwardly from the front end of the tray to protect the canopy 16.

It is further desirable to make the stroller as compact as feasible when it is folded. According to another aspect of the present invention, the handle bar 22 can be made foldable about the pivots P7 as shown in phantom in Fig. 3. By pivoting the handle bar 22 in the counterclockwise direction, the handle bar 22 is no longer the highest or longest point of the folded stroller, and the overall length of the folded stroller can be considerably reduced.

### Infant Carrier Mount

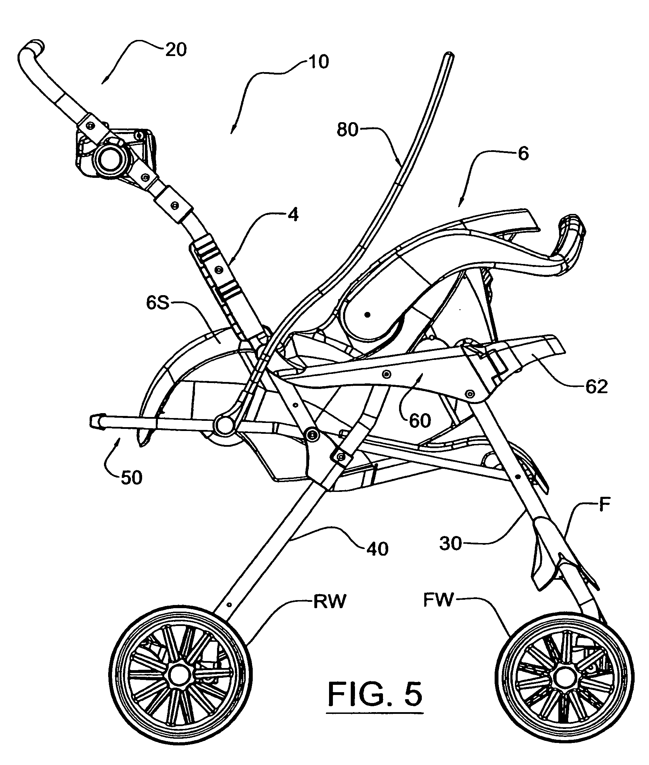

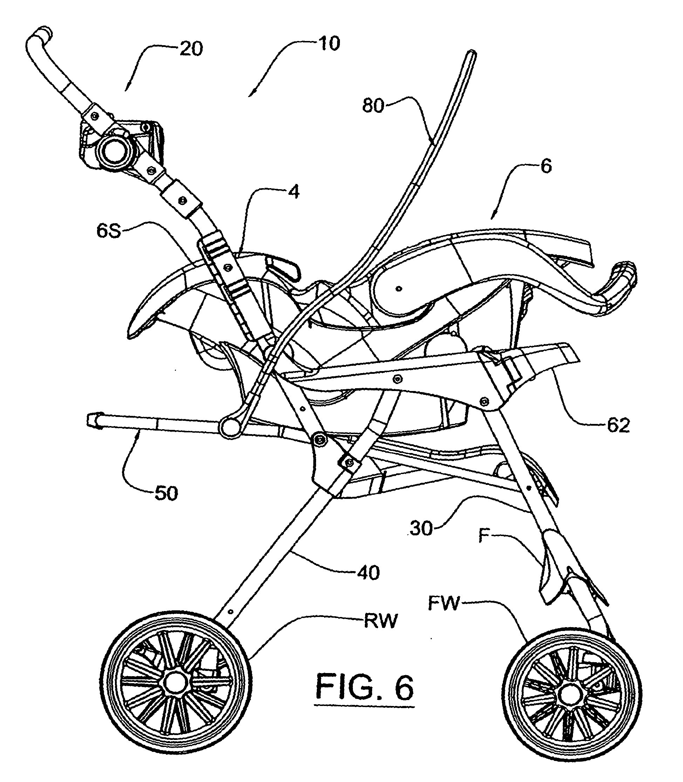

Figs. 5 and 6 illustrate the present stroller 1 with an infant carrier 6 mounted thereto. According to another aspect of the invention, the stroller I provides at least two tilt positions, reclined and upright, while the infant carrier is rearwardly facing. In this respect, the infant carrier 6 can be mounted to the tray as described in co-pending U.S. patent application SN. 08/927,019. That is, the front tray 62 can have a notch or the like (not shown) that can latch onto a retractable catch or the like (not shown) formed on the underside of the infant carrier. The handle bar frame 20 carries infant carrier securing mechanism 4, which comprises a plurality of abutments or stops 4S rotatably mounted to the left and right push arms 24L, 24R. The stops 4S are rotatable between an engage position shown in Fig. I and a disengage position rotated away from the engage position. The present embodiment has four stops, a pair of lower stops 4S and a pair of upper stops 4S.

Referring to Fig. 5, the carrier 6 is seated so that it is rearwardly facing (facing the caregiver) and is positioned in an upright position. In this position, the lower stops 4S are rotated to the engage position to abut the upper front left and right sides 6S of the infant carrier. The lower stops 4S are rotated toward each other after the infant carrier 6 is placed in position. In this position, the front part of the infant carrier 6 is supported by the seat support 50S (and the associated seat cushion 12 and the lower stops 4S) and the lower stops 4S confine the infant carrier from being lifted upwardly.

Referring to Fig. 6, to position the infant carrier in the more reclined position, the lower stops 4S are rotated so that they face each other, as shown in Fig. 1. The infant carrier 6 rests on the front tray 62 and the lower stops 4S. Once the infant carrier 6 is positioned, the upper stops 4S are rotated so that they abut against the upper surface of the upper front left and right sides 6S of the carrier. The lower stops 4S prevent the infant carrier 6 from moving downwardly to the seat 12 and the upper stops 4S prevent the infant carrier 6 from being lifted upwardly. This thus keeps the carrier locked onto the stroller.

### Alternative Embodiment of OHF

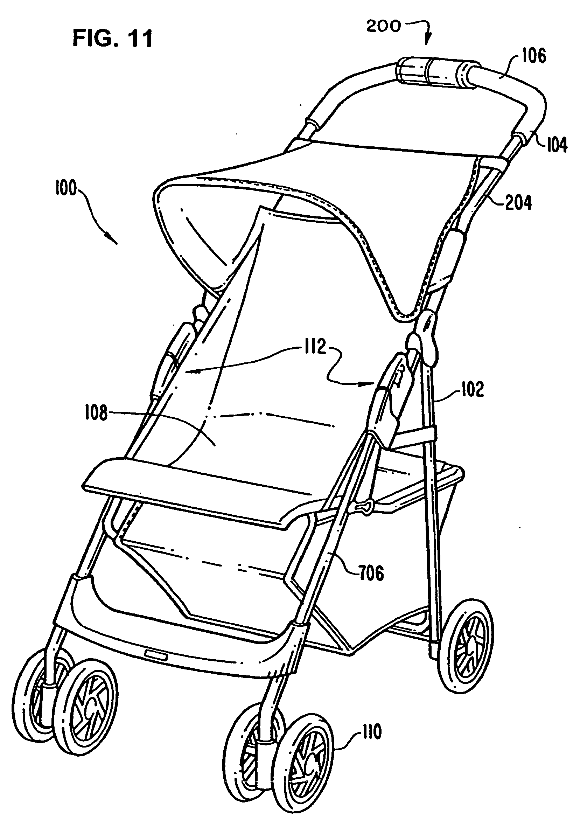

Fig. 11 schematically illustrates a stroller 100 having a foldable frame 102 with left and right fold locking devices 112. The stroller 100 is shown incorporating another embodiment of a one-hand-fold (OHF) actuator 200 according to the present invention. The stroller frame 102 has left and right push arms 204 connected to the respective left and right fold locking devices 112. A handle bar 104 having a gripping area 106 connects to the left and right push arms 204. The stroller also includes a passenger support 108 for holding a child, and a suitable number of wheels 110, e.g., typically three to six wheels (six wheels shown), to allow easy transport. The locking devices 112 can lock the stroller frame from its left and right sides and allow the stroller to collapse from an extended (use) position (Fig. 11) to a collapsed (stow) position (not illustrated). The specific structural details of the stroller and the associated elements that allow the stroller 100 to collapse are disclosed in applicant's U.S. Patent No. 5,454,584.

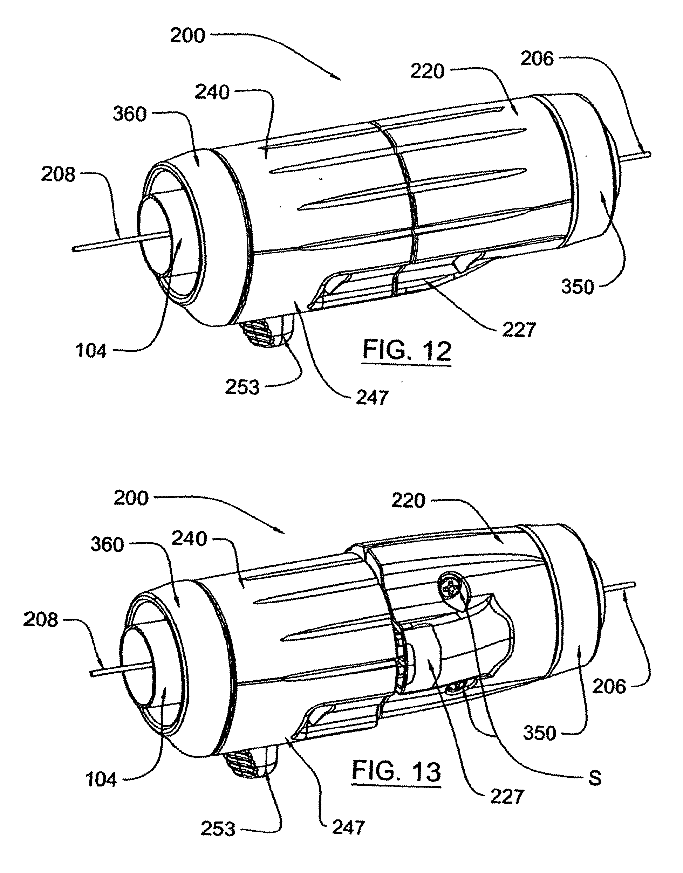

Referring to Figs. 12-15, the OHF actuator 200 comprises a pair of independently operable or movable members 220, 240. The OHF actuator 200 also can include an optional lock 250. The first (right) and second (left) members 220, 240 are movably mounted to the handle bar 104, preferably centrally of the handle bar 104, as shown in Fig. 11. Note that the OHF actuator 200 can be mounted anywhere convenient, including the upper tray 90 (Fig. 1) described with respect to the other OHF actuator 93. Each of the first and second movable members 220, 240 is associated with a cable 206, 208, which extends through the handle bar 104 and the push arm 204, and mechanically links to the associated locking device 112.

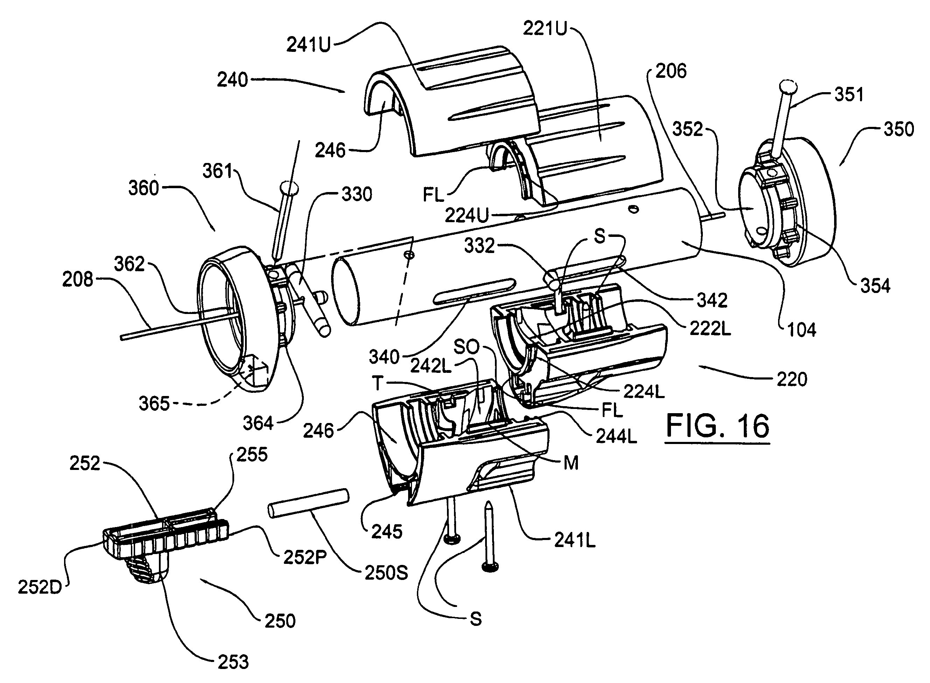

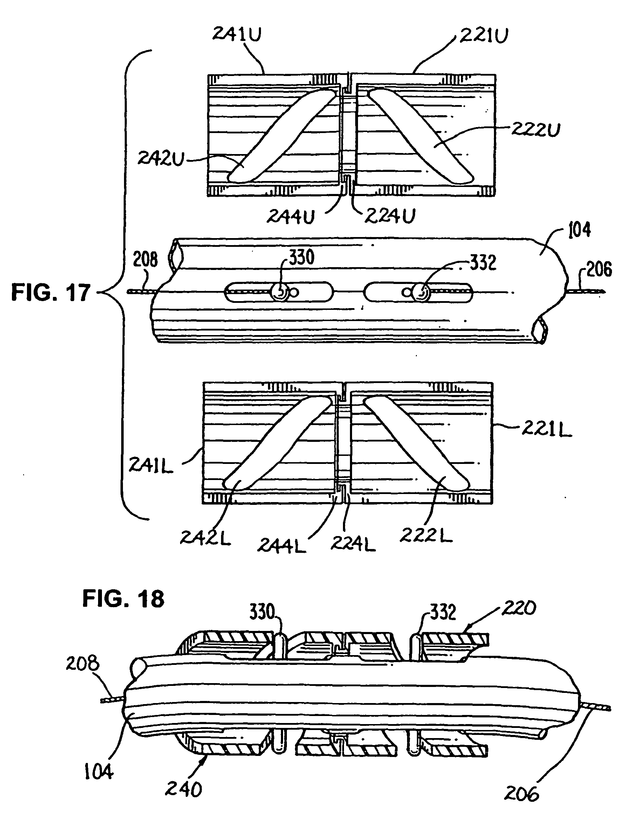

Referring to Fig. 16, each of the first and second movable members 220, 240 can be formed as two half shells 221U (upper), 221L (lower) (collectively 221), 241 U (upper), 24 1 L (lower) (collectively 241). The first upper and lower half shells 221U, 221L are substantially similar and mirror image halves of each other, except for their upper and lower grooves 222U, 222L (collectively 222) engaging the right pin 332. See Figs. 17 and 18. Similarly, the second upper and lower half shells 241 U, 241 L are substantially similar and mirror image halves of each other, again except for their upper and lower grooves 242U, 242L (collectively 242) engaging the left pin 330, as seen in Figs. 17 and 18.

The outer side of each of the first and second movable members 220, 240 is configured to be grasped by an operator, as seen in Figs. 12-15. The first half shells 221 can be held together as a single unit with fasteners, such as screws S (as shown), or snap fit connectors, which are well known, or bonded or welded. Similarly, the second half shells 241 can be held together as a single unit with fasteners, such as screws S (as shown), or snap fit connectors, bonded, welded, etc. The first and second half shells 221, 241 are generally semi-cylindrical members. Each of the first and second two half shells 221U, 22 1 L, 241U, 241L can include aligning mortise M and tenon T. The other half shell can include complementary mortise and tenon for alignment. The first and second half shells 221, 241 can use these mortise and tenon joints and adhesive to bond the upper and lower half shells, instead of screws, or combination of both.

The first and second half shells 221, 241 also can be mechanically connected together, while maintaining their independent operability. In the embodiment shown, the first and second movable members 221, 241 are connected end-to-end with an end coupling 224, 244. The end coupling comprises a first coupling member 224U (upper), 224L (lower) (collectively 224) formed on the first movable member 220 and a second coupling member 244U (upper), 244L (lower) (collectively 244) formed on the second movable member 240. One of the first and second coupling 224, 244 comprises an annular flange FL at the adjoining end and the other comprises a complementary annular socket SO that receives and circumscribes the annular flange FL. In the embodiment shown, the first coupling 224 has the annular flange FL and the second coupling 244 has the complementary annular lip SO. The flange and socket can be reversed. The annular flange and socket configuration maintains the first and second movable members 220, 240 held connected together, preventing their axial displacement relative to each other, while allowing one to rotate relative to the other.

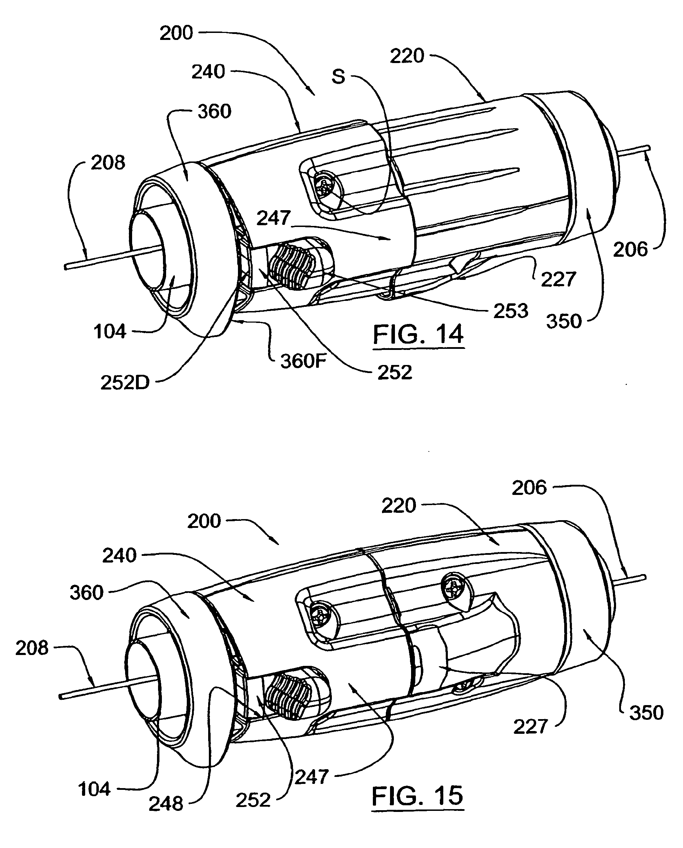

The OHF actuator 200 includes a motion transfer mechanism comprising a first opposing pair of grooves 222, a second opposing pair of grooves 242, and first and second pulling members 332, 330. The first and second grooves 222, 242 engage and move the pulling members 332, 330 to unlock the left and right locking devices 112 as the first and second movable members 220, 240 are rotated to their unlock position (Fig. 15) from their lock position (Fig. 12). The pulling members 332, 330 can comprise first and second pins 340, 330. The handle bar 104 has first and second slots 342, 340. The first and second pins 340, 330 are movably disposed respectively in the first and second slots 342, 340 and are operably connected to the respective first and second locking devices 112. The ends of the pins 340, 330 extend into the respective first and second opposing pairs of grooves 222, 242.

Fig. 13 schematically shows the specific cam profiles of the first and second grooves 222, 242. While many cam profiles of the grooves can be used, the preferred embodiment has a cam profile that generally runs linearly along the circumference of the inner member, such as a helical or spiral groove. If the half shell 22 1 U, 22 1 L, 242U, 24 1 L is laid flat, its groove 222, 242 would form a substantially straight diagonal line. In this respect, each of the first and second half shells 221, 241 can have upper and lower spiral or helical grooves 222U, 222L, 242U, 242L extending spirally or helically along its inner periphery. The first upper and lower of helical grooves 222U, 222L cooperate with the right pin 332, which uses the right cable 206 wired to the right locking device 112. The first helical grooves 222, in the assembled OHF actuator 200, are opposingly directed, forming a substantially X shape (when superimposed one over the other). Similarly, the second upper and lower helical grooves 242U, 242L cooperate with the left pin 330, which uses the left cable 208 wired to the left locking device 112. The second helical grooves, in the assembled OHF actuator 200, are opposingly directed, like the first helical grooves 242, forming a substantially X shape (when superimposed one over the other). Moreover, the upper helical grooves 222U, 242U run in opposite directions. Similarly, the lower helical grooves 222L, 242L run in opposite directions. See Figs. 17 and 18. Because of the opposing helical directions, when the first and second movable members 220, 240 are rotated together, the pins 332, 330 shift linearly in opposite directions, away from each other (lock) and toward each other (unlock).

The first and second pins 332, 330 protrude out beyond their respective first and second slots 342, 340 formed in the handle bar 104, as shown in Figs. 12 and 18. The first upper and lower helical grooves 222U, 222L engage the upper and lower protruding ends of the first pin 332 and guide the first pin 332 axially (right to left) along the first slot 342, which substantially runs axially of the bar 104, as the first movable member 220 rotates from its neutral (lock) position (Fig. 12) to the actuated (unlock) position (Fig. 13). This pulls the right cable 206 and unlocks the right locking device 112. Similarly, the second upper and lower helical grooves 242U, 242L engage the upper and lower protruding ends of the second pin 330 and guide the second pin 332 axially (left to right) along the second slot 340, which substantially runs axially of the bar 104, as the second movable member 240 rotates from its neutral (lock) position (Fig. 12) to the actuated (unlock) position (Fig. 14). This pulls the left cable 208 and unlocks the left locking device 112.

As the operator rotates the movable member 220, 240, the helical grooves 222, 242 rotate and shift the pin 332, 330 axially along the slot 342, 242. Each movable member 220, 240, with the associated pin 332, 330, converts rotational motion into linear axial motion. The first and second helical grooves 222, 242 are configured to move the first and second pins 332, 340 in opposite directions, while the first and second slots 342, 340 confine the first and second pins from rotating. The first and second helical grooves 222, 242 engage and maintain the first and second pins held between the first and second opposing pairs of helical grooves without any need for a spring or the like. That is, the opposingly directed first and second helical grooves 222, 242 entrap the ends of the pins even when the cable has no or little tension, which occurs during the stroller unfolding or latching stage. The opposingly directed helical grooves thus allow a simple way of stabilizing the pins 332, 330 during latching of the stroller, when the tension in the operating cable effectively goes to zero. Thus, a spring or the like is not needed to maintain the pins 332, 330 positioned properly in the grooves of the first and second movable members 220, 240.

Referring to Fig. 16, the OHF actuator 200 further includes first and second collars 350, 360. Each of the first and second collars 350, 360 is fixedly mounted to the left or right sides of the first or second movable members 220, 240. In the embodiment shown, each collar 350, 360 is fixed to the handle bar 104 with a pin 351, 361 riveted (or with a screw screwed) through the handle bar 104 and the collar. Each collar 350, 360 has an aperture 352, 362 dimensioned to allow insertion of the handle bar 104 therethrough and has an extension 354, 364 dimensioned to cooperate with an annular end pocket or recess 226, 246 formed in the collar. Specifically, the extension 354, 364 seats in the annular end recess 226, 246 to prevent the movable member 220, 240 from shifting axially relatively to the handle bar 104, while allowing the respective movable member 220, 240 to rotate relative thereto.

One of the first and second movable members 220, 240 can carry the lock 250, and the collar 350, 360 associated with that movable member can cooperate with the lock 250 to lock that movable member, i.e., to prevent it from rotating unintentionally. To operate the movable member 220, 240 associated with the lock 250, the operator must deliberately move the lock 250 away from the associated collar. The lock 250 is there to prevent inadvertent twisting of that rotation member, thereby preventing inadvertent release of the associated locking device 112 and prevent inadvertent folding of the stroller 100. The lock 250 is preferred, but it is not required since the present OHF actuator 200 requires independent actuation of both of its first and second movable member. The lock 250 thus operates as a secondary lock when it is incorporated.

The lock 250 can be adapted for either left hand or right hand operation. For right hand operation, the second (left) movable member 240 can carry the latch lock 250 and for left hand operation, the first (right) movable member 220 can carry the latch lock 250 so that the latch lock can be operated with the operating hand's thumb. The embodiment shown in Figs. 2-3 is for right hand operation.

Referring to Fig. 16, the lock 250 comprises a slidable member 252 slidably mounted in a recess or pocket 245 formed in the second movable member 240. The pocket 245 can be formed in a protrusion 247 extending outwardly from a generally cylindrical (or any other shaped configured for gripping) movable member 220 so that the user can feel the way through without having to look at it. Moreover, the protrusion 247 provides a positive surface to which the operator can grip, either with one's thumb or other part of the hand, such as the palm. The protrusion 247 also can indicate the position of the movable member 220. In this respect, the other movable member 220, the one not carrying the lock 250 can also have a protruding bulge 227 extending contiguously with the other protrusion 247 forming the pocket 245 for the slidable member 252.

The slidable member 252 can have a raised finger land 253 adapted to be operated with the thumb (or other part of the hand). In this respect, the finger land 253 can have grooves, bumps, contours or any other irregularity to improve gripping. The second collar 360 has a recess or pocket 365 (in phantom) dimensioned to receive a distal end 252D of the slidable member 252. The proximal end 252P of the slidable member 252 is inserted into the pocket 245. To accommodate the finger land 253, the protrusion 247 has a cutout 248 (Figs. 14, 15) to allow the slidable member 252 to move away from the collar 360.

The slidable member 252 can have a bed or recess 255 for seating or receiving a spring 250S, such as a compression spring. The spring 250S abuts against the end of the pocket 245 so that it biases the slidable member 252 toward the collar 360. At its neutral position, the slidable member's distal end 252D thus enters the second collar's pocket 365 to prevent the second movable member 240 from rotating.

Alternatively, the slidable member 252 can also be configured so that it can be inserted into the first movable member 220, such as into a pocket formed in its protruding bulge 227. This slidable member 252 can lock the first and second movable members 220, 240 together to enable easier manipulation of the OHF actuator 200.

Referring to Figs. 14 and 15, the inner face 360F of the collar 360 is configured to keep the distal end 252D of the slidable member 252 from protruding beyond the distal end 240D of the second movable member 240 when the second movable member 240 is rotated away from its neutral position. The inner face 360F blocks the slidable member 252 and keeps it in the compressed state so that when the second movable member 240 is rotated back to its neutral position, the slidable member 252 automatically moves into the pocket 365. Thus, the slidable member 252 will automatically lock without any intervention from the operator when the second movable member 240 returns to its neutral position.

Fig. 6 shows the details of the connection between the cables 206, 208 and the pins 332, 330. The two cables 206, 208 are identical in structure, and the two pins 332, 330 are identical in structure. The cable 206, 208 is threaded through a hole 600 in the pin 332, 330. The cable 206, 208 can have a ball end 602 (or preferably mount a ball 602 after threading the cable in the hole 600) to maintain a secure cable connection. The cable 206, 208 can be threaded into the slot 340, 342 and drawn through the push arm 204, and wired to the locking device 112. The cable is generally maintained slack free (slight tension) so that shifting the pins 330, 332 toward each other readily actuates the locking devices.

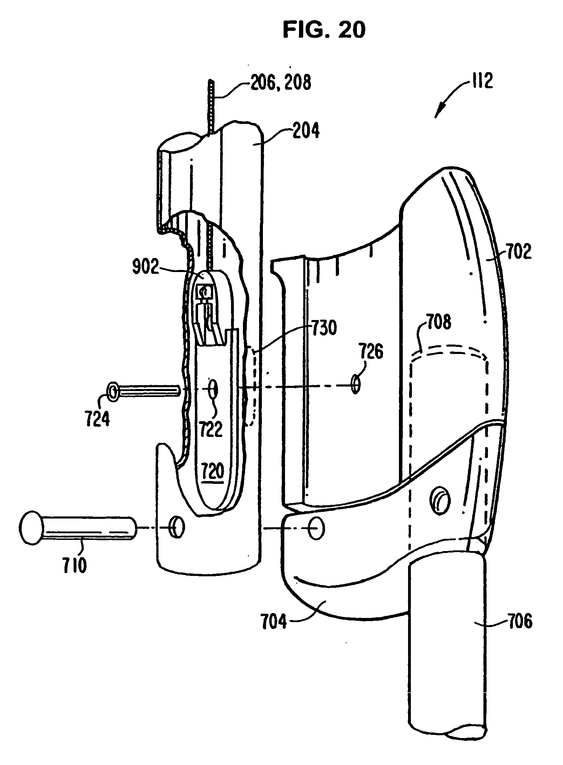

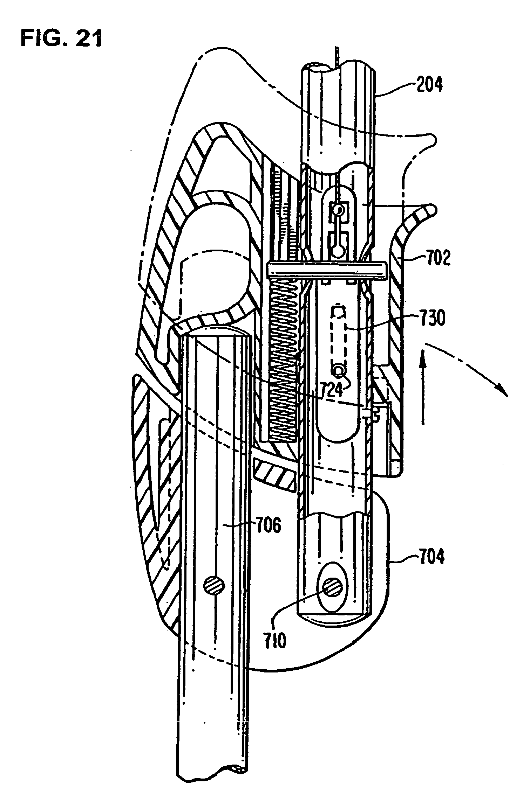

Figs. 20 and 21 show the details of the locking device 112, as disclosed in aforementioned U.S. Patent No. 5,454,584. The locking device comprises a slidable catch 702 and a fixed body 704. The fixed body 704 is attached to the front leg 706. The front leg 706 protrudes beyond the fixed body 704 and extends into the slidable catch 702, which is slidably mounted to the lower end of the push arm 204. The slidable catch 702 has a pocket 708 to receive the protruding end of the front leg 706. Moving the slidable catch 702 upward, as shown in Fig. 21, clears the protruding end of the front leg 706. When the slidable catch 702 clears the protruding end, the push arm 204 can pivot with respect to the front leg 706 about a hinge 710 formed in the fixed body 704. This facilitates collapsing of the stroller.

The slidable catch 706 is wired to the respective movable member 220, 240 using the cable 206, 208 and a control plate 720. The control plate 720 and the cable 206, 208 are disposed inside the push arm 204. The plate 720 includes a cable retention mechanism 902 at its upper end and an aperture 722 about its mid point. The aperture 722 can receive a pin or rivet 724, which extends through an elongated slot 730 cut into the side of the push arm 204. The pin 724 connects to the slidable catch 702 via an aperture 726 formed on the slidable catch 702. This assembly mechanically links the control plate 720 disposed on the interior of the push arm 204 to the slidable catch 702 disposed exterior of the push arm 204. The elongated slot 730 allows the control plate 720 and the connected slidable catch 702 to slide upwardly (as shown in Figs. 20 and 21) with respect to the push arm 204. Fig. 21 shows the sliding action, the released (unlocked) position being shown in phantom.

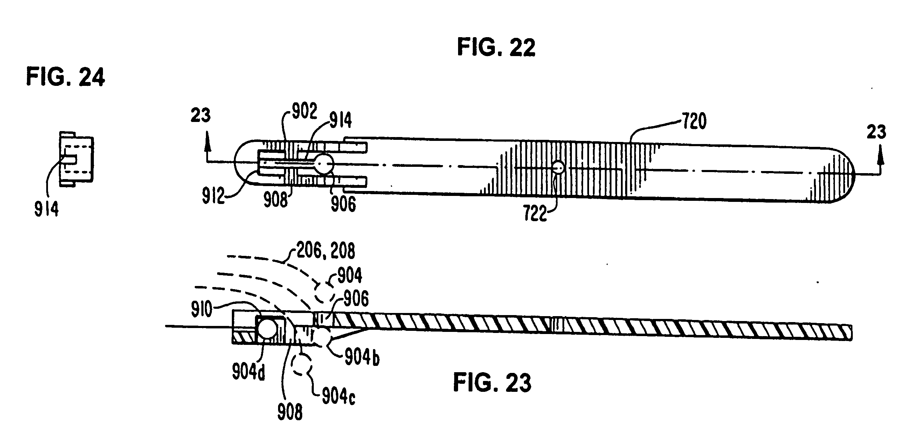

Figs. 22-24 show three views of the control plate 720. The cable retention mechanism 902 is adapted to hold the end of the cable 206, 208. The cable has another ball end 904. The cable retention mechanism 902 thus comprises an aperture 906 into which the ball end 904 enters. After the ball end 904 passes through the aperture 906, the ball end 904 assumes the position at 904b (in phantom). Then the ball end 904 is drawn over a ridge 908 (as shown at 904c in phantom). Finally, the ball end 904 enters a pocket 910 (as shown at 904d). The ball end 904 is bounded by a front wall 912 and the ridge 908. During the cable attachment process, the cable 206, 208 extends through a slot 914.

In operation, Figs. 12-15 illustrate the OHF actuator 200 at various positions, between the neutral (locked) position (Fig. 12) to the fully actuated (unlocked) position (Fig. 15). Figs. 13 and 14 illustrate the OHF actuator 200 in the partially actuated positions, where only one of the two movable members 220, 240 are unlocked in each instance. The OHF actuator 200 of the present invention has two independently operable members 220, 240, each associated with one of the two locking devices 112. In the positions shown in Figs. 13 and 14, since only one of the two locking devices 112 are unlocked, the stroller cannot be folded.

Referring to Figs. 12 and 15, for right hand operation, to fold the stroller 100, the operator places the right hand on the OHF actuator 200. With the right hand thumb, the operator can engage the raised finger land 253 and slide the slidable member 252 to the right (toward the first movable member 220), which unlocks the second movable member 240 from its associated collar 360. Both the first and second movable members 220, 240 are free to rotate at this point. The same hand operating the slidable member 220 can grip both first and second movable members 220, 240 and rotate forward to the unlock positions (Fig. 15). This pulls the first and second pins 332, 330 toward each other, tensioning the cables 206, 208, which in turn lifts the control plates 720 up to raise the slidable catches 702 of the right and left locking devices 112, clearing the protruding ends of the front legs 706 to allow the stroller to fold.

Since the second movable member 240 remains locked and requires deliberate manipulation to unlock and rotate, if the user unintentionally rotates the first movable member 220, the present OHF actuator 200 prevents unintentional folding of the stroller 100. Moreover, since the first and second movable members 220, 240 are independently operable, requiring deliberate and conscientious effort to rotate both movable members with one hand, while the lock 250 is in the unlocked position, the present OHF actuator 200 further prevents unintentional folding of the stroller 200. By providing two independently operable members plus the secondary lock 250, the operator has to conscientiously and deliberately operate both members 220, 240 and the lock 250 to fold the stroller, which prevents unintentional folding.

Given the disclosure of the present invention, one versed in the art would appreciate that there may be other embodiments and modifications within the scope of the present invention. The scope of the present invention accordingly is to be defined as set forth in the appended claims.

## Claims

1. A foldable stroller (1) having a foldable stroller frame convertible between an operating position for use and a folded position, the stroller frame having first and second locking devices (70R, 70L) mounted on the stroller frame to lock the stroller frame in the operating position,
**characterized in that** the stroller further comprises:
an upper tray (90) mounted to the stroller frame; and
a one-hand fold actuator (93) for unlocking the first and second locking devices (70R; 70L) mounted to the upper tray (90).

2. A foldable stroller according to claim 1, wherein the fold actuator (93) comprises a movable member (94) operatively connected to both the first and second locking devices (70R; 70L).

3. A foldable stroller according to claim 1, wherein the fold actuator (93) comprises:
a first movable member (94R) operatively connected to the first locking device (70R) for unlocking the first locking device (70R), the first movable member (94R) being movably mounted to the upper tray (90) for movement between an un-actuated position and an actuated position; and
a second movable member (94L) operatively connected to the second locking device (70L) for unlocking the second locking device (70L), the second movable member (94L) being movably mounted to the upper tray (90) for movement between an un-actuated position and an actuated position,
wherein the first and second movable members (94R, 94L) are independently operable and positioned adjacent to each other for operation with one hand.

4. A foldable stroller according to claim 3, wherein the fold actuator (93) further includes a lock (99) associated with at least one of the first and second movable members (94R, 94L) to prevent the one movable member from moving to the actuated position.

5. A foldable stroller according to claim 3, wherein the fold actuator (93) further includes a lock (99) associated with both of the first and second movable members (94R, 94L) to prevent both movable members from moving to the actuated position.

6. A foldable stroller according to any of claims 4 and 5, wherein the lock (99) and the first and second movable members (94R, 94L) are all operable with one hand to fold the stroller.

7. A foldable stroller according to any of the preceding claims, wherein the upper tray (90) has at least one container holding compartment (91) and an opening (92) for inserting operator's fingers, the actuator (93) being mounted to an underside of the upper tray (90) for a movement between an un-actuated position and an actuated position.

8. A foldable stroller according to any of the preceding claims, wherein the stroller frame has a handle bar frame (20) extending from the first and second locking devices (70R, 70L), and the upper tray (90) is mounted to the handle bar frame (20).

9. A foldable stroller according to claim 8, wherein the handle bar frame (20) comprises a handle bar (22) connected to first and second push arms (24R, 24L), the push arms (24R, 24L) being pivotally connected to the first and second locking devices (70R, 70L).

10. A foldable stroller according to claim 9, wherein the handle bar (22) is pivotally connected to the push arms (24R, 24L) about first and second pivot assemblies (98), the upper tray (90) being connected to the first and second pivot assemblies (98).

11. A foldable stroller according to any of claims 9 and 10, further including first and second remote actuators (3R, 3L) movably mounted to the first and second push arms (24R, 24L), the first and second remote actuators (3R, 3L) being operatively connected respectively to the first and second locking devices (70R, 70L).

12. A foldable stroller according to claim 11, wherein the actuator (93) includes first and second movable members (94R, 94L) and first and second linkage assemblies (95R, 95L) connecting the first and second movable members (94R, 94L) to the first and second remote actuators (3R, 3L).

13. A foldable stroller according to claim 12, wherein each of the first and second linkage assemblies (95R, 95L) comprises a substantially U-shaped cross linkage (96) and a push rod (97) connected to the cross linkage (96), the cross linkage (96) having first, second, and third arms (96F, 96S, 96T), the third arm (96T) being pivotally journaled to the underside of the upper tray (90) and joining the first and second arms (96F, 96S), the first arm (96F) being connected to one side of the actuator (93) and the second arm (96S) being pivotally connected to the push rod (97), the push rod (97) being connected to the respective first and second remote actuators (3R, 3L).

14. A foldable stroller according to any of the preceding claims, further including means (4) for mounting an infant carrier in a rearwardly facing direction and providing at least two recline positions.

## Patentansprüche

1. Ein zusammenklappbarer Kinderwagen (1) mit einem zusammenklappbaren Kinderwagenrahmen, der zwischen einer Betriebsposition für die Verwendung und einer zusammengeklappten Position umwandelbar ist, wobei der Kinderwagenrahmen eine erste und eine zweite Verriegelungseinrichtung (70R, 70L) hat, die am Kinderwagenrahmen befestigt sind, um den Kinderwagenrahmen in der Betriebsposition zu verriegeln,
**dadurch gekennzeichnet, dass** der Kinderwagen weiter aufweist:
eine obere Ablage (90), die am Kinderwagenrahmen befestigt ist; und
ein Einhand-Klappbedienteil (93) zum Entriegeln der ersten und zweiten Verriegelungseinrichtung (70R, 70L), das an der oberen Ablage (90) befestigt ist.

2. Ein zusammenklappbarer Kinderwagen gemäß Anspruch 1, wobei das Klappbedienteil (93) ein bewegliches Element (94) aufweist, das wirksam sowohl mit der ersten als auch mit der zweiten Verriegelungseinrichtung (70R, 70L) verbunden ist.

3. Ein zusammenklappbarer Kinderwagen gemäß Anspruch 1, wobei das Klappbedienteil (93) aufweist:
ein erstes bewegliches Element (94R), das wirksam mit der ersten Verriegelungseinrichtung (70R) verbunden ist, zum Entriegeln der ersten Verriegelungseinrichtung (70R), wobei das erste bewegliche Element (94R) beweglich an der oberen Ablage (90) befestigt ist, zur Bewegung zwischen einer nicht-betätigten Position und einer betätigten Position; und
ein zweites bewegliches Element (94L), das wirksam mit der zweiten Verriegelungseinrichtung (70L) verbunden ist, zum Entriegeln der zweiten Verriegelungseinrichtung (70L), wobei das zweite bewegliche Element (94L) beweglich an der oberen Ablage (90) befestigt ist, zur Bewegung zwischen einer nicht-betätigten Position und einer betätigten Position,
wobei das erste und zweite bewegliche Element (94R, 94L) unabhängig betätigbar sind und aneinander angrenzend zur Betätigung mit einer Hand positioniert sind.

4. Ein zusammenklappbarer Kinderwagen gemäß Anspruch 3, wobei das Klappbedienteil (93) weiter eine Sperre (99) beinhaltet, die mindestens einem von dem ersten und dem zweiten beweglichen Element (94R, 94L) zugeordnet ist, um das eine bewegliche Element daran zu hindern, sich in die betätigte Position zu bewegen.

5. Ein zusammenklappbarer Kinderwagen gemäß Anspruch 3, wobei das Klappbedienteil (93) weiter eine Sperre (99) beinhaltet, die sowohl dem ersten als auch dem zweiten beweglichen Element (94R, 94L) zugeordnet ist, um beide beweglichen Elemente daran zu hindern, sich in die betätigte Position zu bewegen.

6. Ein zusammenklappbarer Kinderwagen gemäß einem der Ansprüche 4 und 5, wobei die Sperre (99) und das erste und zweite bewegliche Element (94R, 94L) alle mit einer Hand betätigbar sind, um den Kinderwagen zusammenzuklappen.

7. Ein zusammenklappbarer Kinderwagen gemäß einem der vorangegangenen Ansprüche, wobei die obere Ablage (90) mindesten ein Fach (91) zum Halten eines Behälters und eine Öffnung (92) zum Einführen der Finger des Benutzers hat, wobei das Bedienteil (93) an einer Unterseite der oberen Ablage (90) für eine Bewegung zwischen einer nicht-betätigten und einer betätigten Position befestigt ist.

8. Ein zusammenklappbarer Kinderwagen gemäß einem der vorangegangenen Ansprüche, wobei der Kinderwagenrahmen einen Griffrahmen (20) hat, der sich von der ersten und zweiten Verriegelungseinrichtung (70R, 70L) aus erstreckt, und wobei die obere Ablage (90) am Griffrahmen (20) befestigt ist.

9. Ein zusammenklappbarer Kinderwagen gemäß Anspruch 8, wobei der Griffrahmen (20) einen Griff (22) aufweist, der mit einem ersten und einem zweiten Schiebearm (24R, 24L) verbunden ist, wobei die Schiebearme (24R, 24L) drehbar mit der ersten und zweiten Verriegelungseinrichtung (70R, 70L) verbunden sind.

10. Ein zusammenklappbarer Kinderwagen gemäß Anspruch 9, wobei der Griff (22) mit den Schiebearmen (24R, 24L) drehbar um ein erstes und ein zweites Drehbauteil (98) verbunden ist, wobei die obere Ablage (90) mit dem ersten und zweiten Drehbauteil (98) verbunden ist.

11. Ein zusammenklappbarer Kinderwagen gemäß einem der Ansprüche 9 und 10, weiter beinhaltend ein erstes und ein zweites Fernbedienteil (3R, 3L), die beweglich an dem ersten und zweiten Schiebearm (24R, 24L) befestigt sind, wobei das erste und zweite Fernbedienteil (3R, 3L) jeweils mit der ersten und zweiten Verriegelungseinrichtung (70R, 70L) wirksam verbunden ist.

12. Ein zusammenklappbarer Kinderwagen gemäß Anspruch 11, wobei das Bedienteil (93) ein erstes und ein zweites bewegliches Element (94R, 94L) und ein erstes und ein zweites Verbindungsbauteil (95R, 95L), die das erste und zweite bewegliche Element (94R, 94L) mit dem ersten und zweiten Fernbedienteil (3R, 3L) verbinden, beinhaltet.

13. Ein zusammenklappbarer Kinderwagen gemäß Anspruch 12, wobei jedes des ersten und zweiten Verbindungsbauteils (95R, 95L) eine im Wesentlichen U-förmige Querverbindung (96) und eine mit der Querverbindung (96) verbundene Schubstange (97) aufweist, wobei die Querverbindung (96) einen ersten, einen zweiten und einen dritten Arm (96F, 96S, 96T) hat, wobei der dritte Arm (96T) drehbar in der Unterseite der oberen Ablage (90) gelagert ist und den ersten und zweiten Arm (96F, 96S) verbindet, wobei der erste Arm (96F) mit einer Seite des Bedienteils (93) verbunden ist und der zweite Arm (96S) mit der Schubstange (97) drehbar verbunden ist, wobei die Schubstange (97) jeweils mit dem ersten und zweiten Fernbedienteil (3R, 3L) verbunden ist.

14. Ein zusammenklappbarer Kinderwagen gemäß einem der vorangegangenen Ansprüche, weiter beinhaltend Mittel (4) zum Befestigen einer Säuglings-Trageschale in einer nach hinten blickenden Ausrichtung und zum Bereitstellen von mindestens zwei Zurücklehnpositionen.

## Revendications

1. Une voiture d'enfant repliable (1) comprenant un cadre de voiture d'enfant repliable et convertible entre une position active ou de service pour l'utilisation et une position repliée, le cadre de voiture d'enfant comprenant des premier et deuxième dispositifs de verrouillage (70R, 70L) montés sur le cadre de voiture d'enfant pour verrouiller le cadre de voiture d'enfant dans la position active,
**caractérisée en ce que** la voiture d'enfant comporte en outre :
un plateau ou traverse supérieur(e) (90) monté sur le cadre de la voiture d'enfant ; et un organe (93) d'actionnement de pliage-dépliage à une main pour déverrouiller les premier et deuxième dispositifs de verrouillage (70R, 70L) montés sur le plateau supérieur (90).

2. Une voiture d'enfant repliable selon la revendication 1, dans laquelle l'organe (93) d'actionnement de pliage-dépliage comporte un organe mobile (94) relié fonctionnellement et simultanément aux premier et deuxième dispositifs de verrouillage (70R; 70L).

3. Une voiture d'enfant repliable selon la revendication 1, dans laquelle l'organe (93) d'actionnement de pliage-dépliage comporte : un premier organe mobile (94R) relié fonctionnellement au premier organe de verrouillage (70R) pour déverrouiller le premier dispositif de verrouillage (70R), le premier organe mobile (94R) étant monté susceptible de se déplacer sur le plateau supérieur (90) pour se déplacer entre une position non actionnée et une position actionnée ; et
un deuxième organe mobile (94L) relié fonctionnellement au deuxième dispositif de verrouillage (70L) pour déverrouiller le deuxième dispositif de verrouillage (70L), le deuxième organe mobile (94L) étant monté mobile sur le plateau supérieur (90) pour se déplacer entre une position non actionnée et une position actionnée,
les premier et deuxième organes mobiles (94R, 94L) étant susceptibles d'être actionnés indépendamment et positionnés adjacents l'un à l'autre pour l'actionnement à une main.

4. Une voiture d'enfant repliable selon la revendication 3, dans laquelle l'organe (93) d'actionnement de pliage-dépliage comporte en outre un organe de verrouillage (99) associé à au moins l'un parmi le premier et le deuxième organes mobiles (94R, 94L) pour empêcher le un organe mobile de se déplacer vers la position actionnée.

5. Une voiture d'enfant repliable selon la revendication 3, dans laquelle l'organe (93) d'actionnement de pliage-dépliage comporte en outre un organe de verrouillage (99) associé simultanément aux premier et deuxième organes mobiles (94R, 94L) pour empêcher les deux organes mobiles de se déplacer vers la position actionnée.

6. Une voiture d'enfant repliable selon l'une quelconque des revendications 4 et 5, dans laquelle l'organe de verrouillage (99) et les premier et deuxième organes mobiles (94R, 94L) sont tous aptes à être actionnés à une main pour replier la voiture d'enfant.

7. Une voiture d'enfant repliable selon l'une quelconque des revendications précédentes, dans laquelle le plateau supérieur (90) comporte au moins un compartiment (91) de support de contenant et une ouverture (92) pour insérer les doigts d'un opérateur, l'organe (93) d'actionnement étant monté sur une face inférieure du plateau supérieur (90) pour se déplacer entre une position non actionnée et une position actionnée.

8. Une voiture d'enfant repliable selon l'une quelconque des revendications précédentes, dans laquelle le cadre de la voiture d'enfant comporte un cadre (20) de barre de poignée s'étendant depuis le premier et le deuxième organes de verrouillage (70R, 70L) et dans laquelle voiture le plateau supérieur (90) est monté sur le cadre (20) de barre de poignée.

9. Une voiture d'enfant repliable selon la revendication 8, dans laquelle le cadre (20) de barre de poignée comporte une barre (22) de poignée reliée à des premier et deuxième bras de poussage (24R, 24L), les bras de poussage (24R, 24L) étant reliés à pivotement aux premier et deuxième dispositifs de verrouillage (70R, 70L).

10. Une voiture d'enfant repliable selon la revendication 9, dans laquelle la barre (22) de poignée est reliée à pivotement aux bras de poussage (24R, 24L) autour de premier et deuxième ensembles de pivotement (98), le plateau supérieur (90) étant relié aux premier et deuxième ensembles de pivotement (98).

11. Une voiture d'enfant repliable selon l'une quelconque des revendications 9 et 10, comportant en outre des premier et deuxième organes (3R, 3L) de téléactionnement montés sur le premier et le deuxième bras de passage (24R, 24L), les premier et deuxième organes (3R, 3L) de téléactionnement étant reliés fonctionnellement et respectivement aux premier et deuxième dispositifs de verrouillage (70R, 70L).

12. Une voiture d'enfant repliable selon la revendication 11, dans laquelle l'organe d'actionnement (93) comporte des premier et deuxième organes mobiles (94R, 94L) et des premier et deuxième ensembles (95R, 95L) d'articulation et de liaison reliant les premier et deuxième organes mobiles (94R, 94L) aux premier et deuxième organes (3R, 3L) de téléactionnement.

13. Une voiture d'enfant repliable selon la revendication 12, dans laquelle chacun parmi le premier et le deuxième ensembles (95R, 95L) d'articulation et de liaison comporte un organe croisé (96) d'articulation et de liaison sensiblement en forme de U et une bielle de poussée (97) reliée à l'organe croisé (96) d'articulation et de liaison muni de premier, deuxième et troisième bras (96F, 96S, 96T), le troisième bras (96T) étant articulé de façon pivotante sur la face inférieure du plateau supérieur (90) et reliant les premier et deuxième bras (96F, 96S), le premier bras (96F) étant relié à une face de l'organe d'actionnement (93) et le deuxième bras (96S) étant relié de façon pivotante à la bielle de poussée (97), qui est reliée au premier et deuxième organes respectifs (3R, 3L) de téléactionnement.

14. Une voiture d'enfant repliable selon l'une quelconque des revendications précédentes, comportant en outre des moyens (4) pour monter un support pour enfant dans une direction faisant face à l'arrière et présentant au moins deux positions d'inclinaison.
